# EUROPEAN PATENT APPLICATION

(11) **EP 4 506 019 A1**
(43) Date of publication of application: **12.02.2025**
(21) Application number: 22931146.9
(22) Date of filing: 08.11.2022
(51) Int. Cl.: A61L 2/20

(54) **METHOD FOR REDUCING CONTAMINATION IN AGRICULTURAL AND FISH PRODUCTS USING H2O2**

(30) Priority: 08.03.2022 MX 2022002836
(71) Applicant: Agroetika S. de R. L. de C. V., Zapopan, Jalisco.,45234 (MX)
(72) Inventor: MAZZOLO, Sergio Aldo, Zapopan, Jalisco., 45238 (MX)
(74) Representative: ZBM Patents - Zea, Barlocci & Markvardsen
(86) International application number: PCT/MX2022/050112
(87) International publication number: WO 2023/172122

(57) **Abstract**

A method for reducing contamination in agricultural/fishery products, comprising: determining whether the contamination is microbiological and/or chemical, and if so; placing the contaminated agricultural/fishery product inside containers made of a material resistant to high temperatures, high vacuum, positive pressure, and allowing the circulation of gaseous fluids; subject the agricultural/fishery product, inside sterilization equipment, to vaporization with an aqueous solution containing 300 to 5000 ppm of food grade hydrogen peroxide, to obtain an agricultural/fishery product with microbiological contamination reduced by 5 logarithms, and/or a chemical contamination reduced from 95. 0 a 99.9%

Agricultural/fishery products decontaminated by the method of the present invention, which has a microbiological contamination reduced in 5 logarithms, and/or a chemical contamination reduced from 95.0 to 99.9%.

## Description

### TECHNICAL FIELD OF THE INVENTION

The present invention relates to the technical fields of the Agricultural and Food Industry, because it refers to a method for reducing microbiological and/or chemical contamination in agricultural and fishery products, through the use of food-grade hydrogen peroxide.

### PRIOR ART OF THE INVENTION

Patent document US6245294 (B1) relates to processes and apparatus for pasteurizing materials, and more particularly to a method and device for killing microorganisms on food materials, such as raw meat, fruits, and vegetables by controlled application of a biocide treatment gas in a sub-atmospheric environment. The method comprises the first step of isolating the materials from the environment; the second step of exposing the materials to vacuum; the third step of treating the materials with the treatment gas; the fourth step involves re-exposing the materials to vacuum; and the fifth step of opening the product chamber and returning the materials to the environment. The applied treatment substance is selected from one or more gases, such as steam, ozone, chlorine dioxide, hydrogen peroxide, ethylene oxide, methyl bromide, chlorine, iodine, bromine, and formaldehyde; steam is preferred. The treatment gases are applied in a substantially air-free form, defined herein as greater than 80% by volume/volume. The use of such gases avoids difficulties relating to penetration into surface irregularities, such as pores and voids, which might otherwise have the ability to reduce microbial destruction. Because of their small size, these gases can enter any cavity large enough to contain microorganisms such as bacteria. To illustrate this point, it is noted that Salmonellae are short straight rods approximately 0.7×10⁻⁶ m thick and 4×10⁻⁶ m long. Single gas molecules are typically 2×10⁻¹⁰ m in diameter and are therefore 10,000 times smaller than a bacterium. Materials treatable by the method are limited only by the fact that they should not undergo any undesirable physical changes of an irreversible nature. Food-type materials such as meats, fruits, vegetables, and fungi are all susceptible to this process. Meats include fish, seafood, poultry, pork, beef, and processed meats such as hot dogs and sausages. Fruits include apples, peaches, pears, plums, cherries, nectarines, papaya, oranges, grapefruit, melons, and pineapples. Seeds include 1) nuts such as walnuts, chestnuts, pecans, pistachios, hazelnuts, and almonds; 2) cereals such as corn, wheat, rice, oats, milo, and buckwheat; 3) legumes such as beans and peas, as well as tomatoes and cucumbers. Vegetables such as carrots, broccoli, radishes, cauliflower, peppers, beets and potatoes. Non-food-type materials that may be treated include clothing, surgical equipment, agricultural equipment, filtration equipment, storage containers, and growing substrates. Treatment conditions will vary according to the materials involved and the degree of pasteurization desired. Vacuum times will typically range from 0.004 to 1 s, preferably from 0.1 to 0.5 s. Absolute vacuum pressures will range from 25.86 to 362 mmHg, preferably 46.54 to 98.26 mmHg. When the treatment is with steam, it is desired, from the standpoint of thermal efficiency and reduced processing time, to be as close to its saturation temperature as practical, with this temperature typically in the range of 104.44 to 176.67°C. Vapor times will typically range from 0.004 to 1 s, preferably from 0.05 to 0.1 s. Corresponding vapor pressures will range from 827.44 to 7240.09 mmHg.

The method described in document US6245294 (B1) requires a second vacuum stage; the pressure and temperature conditions are very high, but this method was performed only with water vapor, so it does not describe or disclose the pressure, temperature and time conditions for the treatment of the materials with hydrogen peroxide vapor and only limits itself to say that the treatment conditions will depend on the material to be treated and the desired levels of disinfection.

Patent document US2021162086 (A1) also refers to a method for reducing microbiological contamination in a closed chamber formed by at least two interconnected components. The example method described is in a small volume (0.01 to 0.3 mL) of an aqueous hydrogen peroxide solution being dosed onto the head membrane 8, for example, by dripping or spraying, and then the head membrane 8 is connected tightly to the neck collar 2 so that the chamber 6 is sealed shut. Alternatively, the fluid can also be sprayed onto the internal surfaces of the cap 4. Direct heating of the applied fluid is achieved by microwave radiation. This has the advantage of heating the fluid directly, while the walls of chamber 6 are only slightly heated, if at all so that the radiation itself contributes only indirectly to the reduction of the germ count. At a preferred frequency of microwave radiation in a frequency range of 500 to 30 GHz, the fluid is at least partially evaporated and thus homogeneously distributed within chamber 6.

Patent document WO2006031957 (A) describes a system for microbially decontaminating a room or other defined area with an antimicrobial vapor, such as hydrogen peroxide in vapor form, or other vapors comprising peracetic acid or other peroxide compounds, aldehydes, such as formaldehyde and the like. Air from a large defined region, such as room 10 with a volume on the order of 1000-4000 m³, is drawn through a contamination removal filter 12 and a peroxide destruction catalyst 14 by a blower 16, which is connected to the filter and destructor by a duct or line 17. The blower optionally draws the air through a dryer, such as a desiccant wheel 18 which removes water vapor. A second blower 20 blows hot air through a saturated portion of the desiccant wheel to remove and expel the absorbed moisture to the atmosphere. This process preferably heats the recirculated air from the ambient room temperature, typically around 20 - 40°C. A series of air quality meters 22 monitors the dry air leaving the blower to determine its ability to absorb hydrogen peroxide vapor. The air is returned to room 10 through a duct or line 23 and another microbe-blocking filter 24, such as a HEPA filter. Optionally, the duct system includes all or a portion of a pre-existing HVAC system. Upon initially starting a decontamination process, air is circulated through the dryer for a sufficient time to reduce the relative humidity in the room to an acceptable level, preferably below 20% relative humidity. For sealed cabinets, pressure control within the cabinet may be appropriate. For rooms, pressure control is not essential and would be addressed on a case-by-case basis. In clean rooms and the like, where potentially contaminated air must be prevented from entering the room, the pressure in the room is maintained above ambient.

Finally, patent document CN103732063 (A) relates to C1-C22 peroxycarboxylic acid compositions, such as mixed peroxycarboxylic acid compositions, which have improved antimicrobial efficacy compared to conventional peroxycarboxylic acid compositions due in part to the solubilization of the mixed peroxycarboxylic acid compositions using C2-C6 alcohols. The document also describes methods employing the reduced temperature enhanced microbial efficacy compositions, including, for example, use in aseptic cleaning. In a particular aspect of the invention, the improved antimicrobial peroxycarboxylic acid compositions include a C2-C6 alcohol for solubilization of the C1-C22 peroxycarboxylic acids to generate compositions having a lower use concentration.

Patent documents US2021162086 (A1) WO2006031957 (A) and CN103732063 (A) do mention the use of hydrogen peroxide, but they are formulations for aseptic cleaning uses of rooms, surfaces, and liquids contained in closed containers, which is well known that peroxide is used for those purposes; but they do not disclose or anticipate its use in reducing microbiological contamination in agricultural and fishery products.

Therefore, to contribute to the solution of the problems that currently exist in the state of the art, a method was developed to reduce microbiological contamination in agricultural and fishery products.

The characteristic details of the present invention are illustrated in the following description, examples, and figures, which are provided for illustrative purposes, but never limitative, wherein:

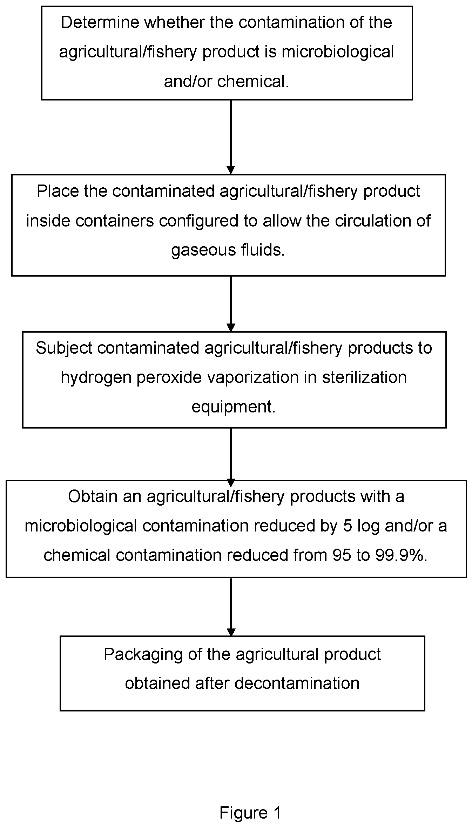

Figure 1 is a flow diagram of the method for reducing microbiological and/or chemical contamination of agricultural products, in accordance with the present invention.

### DISCLOSURE OF THE INVENTION

The present invention refers to a method for reducing contamination in fresh and/or dried or dehydrated agricultural and fishery products, preferably reducing microbiological and/or chemical contamination.

Microbiological contamination can be caused by bacteria, viruses, fungi, etc.) and chemical contamination can be caused by agrochemicals, pesticides, hormones, and antibiotics, among others; which affect and contaminate agricultural products, such as; fruits, strawberries, veggies, vegetables, tubers, rhizomes, seeds, grains, meats, etc.; as well as fishery products, such as fish, shellfish, etc.

Therefore, the first object of the present invention is a method for reducing contamination in agricultural and fishery products, which comprises the following stages:
**i)** determine whether the contamination of the agricultural/fishery product is caused by microbiological agents (viruses, bacteria, fungi, etc.) and/or chemicals (agrochemicals, pesticides, hormones, antibiotics, etc.), using conventional analytical techniques that detect the presence of such contaminants, and if so;
**ii)** place the agricultural/fishery product contaminated by microbiological and/or chemical agents inside containers made of a material resistant to high temperatures, high vacuum, and positive pressure, and configured in such a way as to allow the circulation of gaseous fluids to make uniform contact with the agricultural/fishery product to be decontaminated;
**iii)** subject the agricultural/fishery product, within sterilization equipment, to a vaporization with an aqueous solution containing 300 to 5000 ppm of food-grade hydrogen peroxide, and to conditions of high vacuum, temperature, and time, depending on the agricultural/fishery product and degree of microbiological and/or chemical contamination, to reduce microbiological and/or chemical contamination;
**iv)** obtain an agricultural/fishery product with a microbiological contamination reduced by 5 logarithms, and/or a chemical contamination reduced from 95.0 to 99.9%; and
**v)** packaging the agricultural/fishery product obtained in the previous step.

The agricultural/fishery product that can be decontaminated with the method of the present invention can be fresh turgid, dehydrated, or dried.

The containers in which the contaminated agricultural/fishery product is placed are trays, layettes, baskets, grid boxes, and/or boxes open at the top with access to gaseous fluids.

The sterilization equipment used in this method may be an autoclave.

One embodiment of the method of the present invention is when the conditions of high vacuum, temperature, and time, are: -0.00136 to -0.0394 Kg/cm², up to 90°C, for 1 minute up to 3 hours.

With the method of the present invention, a contamination reduction of 5 logarithmic reductions of the initial contamination can be achieved when the contamination is microbiological and Salmonella spp. or a subroutine organism is taken as a reference.

When the contamination is chemical, with this method a reduction of the contamination can be achieved from 99.5 to 99.90%.

Therefore, the present invention relates to an agricultural/fishery product decontaminated by the method in accordance with the present invention, wherein said agricultural/fishery product acquires a microbiological contamination reduced in 5 logarithms, and/or a chemical contamination reduced from 95.0 to 99.9%.

## Claims

1. A method for reducing contamination in agricultural and fishery products, comprising:
i) determine if the contamination of the agricultural/fishery product is caused by microbiological and/or chemical agents, through conventional analysis techniques that detect the presence of such contaminating agents, and if so;
ii) place the agricultural/fishery product contaminated by microbiological and/or chemical agents, inside containers made of a material resistant to high temperatures, high vacuum, and positive pressure, and configured in such a way as to allow the circulation of gaseous fluids to make uniform contact with the agricultural/fishery product to be decontaminated;
iii) subject the agricultural/fishery product, within sterilization equipment, to vaporization with an aqueous solution containing 300 to 5000 ppm of food-grade hydrogen peroxide, and to high vacuum, temperature, and time conditions, depending on the agricultural/fishery product and degree of microbiological and/or chemical contamination, in order to reduce microbiological and/or chemical contamination;
iv) obtain an agricultural/fishery product with microbiological contamination reduced by 5 logarithms, and/or chemical contamination reduced from 95. 0 to 99.9%; and
v) packaging the agricultural/fishery product obtained in the previous stage.

2. The method of the preceding claim, wherein the agricultural/fishery product is fresh turgid, dehydrated, or dried.

3. The method of claim 1, wherein the containers in which the contaminated agricultural/fishery product is placed are: trays, baskets, baskets, grid boxes, and/or boxes open at the top with access for gaseous fluids.

4. The method according to claim 1, wherein the sterilization equipment is an autoclave.

5. The method of claim 1, wherein the high vacuum, temperature, and time conditions are: -0.00136 to -0.0394 Kg/cm², up to 90°C, for 1 min up to 3 h.

6. The method of claim 1, wherein for the measurement of the initial microbiological contamination, Salmonella spp. is taken as reference.

7. An agricultural/fishery product decontaminated by the method according to the preceding claims, comprising, a microbiological contamination reduced in 5 logarithms, and/or a chemical contamination reduced from 95.0 to 99.9%.
